# EUROPEAN PATENT SPECIFICATION

(11) **EP 4 211 326 B1**
(45) Date of publication and mention of the grant of the patent: **19.08.2026**
(21) Application number: 20830105.1
(22) Date of filing: 11.12.2020
(51) Int. Cl.: E05B 51/02, E05B 83/36, F16B 31/00, F42B 3/00

(54) **SAFETY SYSTEM FOR AN ENCLOSURE**
SICHERHEITSSYSTEM FÜR EIN GEHÄUSE
SYSTÈME DE SÉCURITÉ POUR UNE ENCEINTE

(43) Date of publication of application: 19.07.2023
(73) Proprietor: Siemens Mobility GmbH, 80997 München (DE)
(72) Inventor: DAGA, Pruthviraj, Nashik, Maharashtra 422009 (IN); PATWARDHAN, Ajit, Mumbai, Maharashtra 422005 (IN)
(74) Representative: Isarpatent
(86) International application number: PCT/EP2020/085737
(87) International publication number: WO 2022/122168

(56) References cited:
- WO-A1-2005/031247
- DE-A1- 102008 032 386
- KR-A- 20160 099 394
- US-A1- 2019 352 946
- US-B1- 6 412 584

## Description

The present invention relates to doors and more particularly relates to safety system for door of an enclosure.

Emergency exits enable occupants of a confined space to exit an occupant space when an emergency arises. Such emergency exits are present within buildings, passenger trains, buses and so on. Typically, emergency exits include a door which is kept hinged, using latches, under normal conditions. When an emergency arises, the door is manually opened for egress of the occupants. However, delays in opening of the door endangers lives of the occupants and may also lead to fatalities under critical conditions.

In light of the above, there exists a need for a safety system for an enclosure that allows egress of occupants upon detecting an emergency.

DE 10 2008 032386 A1 relates to an emergency exit device for vehicle door, has pyrotechnics device provided with adjustable piston, where section retracts piston by igniting of pyrotechnics device when section is not penetrating plate-shaped hinge part.

KR 2016 0099394 A relates to an apparatus for escaping in emergency of ship.

US 6 412 584 B1 relates to a vehicle door opener.

WO 2005/031247 A1 relates to an explosive bolt.

US 2019/352946 A1 relates to a pyrotechnic latch actuator responsive to a decompression detection system and method.

Therefore, it is an object of the present invention to provide a safety system for an enclosure comprising a door.

This object is achieved by a safety system according to claim 1.

In accordance with an embodiment of the invention, the safety system for a door of an enclosure comprises a triggering circuit configured to generate a trigger signal based on an event. The term enclosure, as used herein, may refer o any confined space such as a building, a passenger train and so on. The triggering circuit is, for example, an electronic circuit that generates the trigger signal based on occurence of the event. Non-limiting examples of events include presence of fire, smoke, collision, gas leaks, water ingress, sudden change in speed or pressure and manual inputs. The events are detected using one or more sensors installed in the enclosure. The safety system further comprises a fastening means operably coupled to the triggering circuit. The fastening means is adapted to maintain the door of the enclosure in a locked condition and disengage itself to unlock the door of the enclosure in response to the triggering signal. According to the claimed invention, the fastening means comprises at least one pyrotechnic fastener. The pyrotechnic fastener comprises a means for maintaining the door in the locked condition, and a means for aiding a controlled explosion to disengage the pyrotechnic fastener based on the trigger signal generated by the triggering circuit. In an example, the means for maintaining the door in the locked condition is a nut and bolt mechanism. In one embodiment, the means for aiding the controlled explosion is a pyrotechnic mixture that comprises at least one primary explosive as ingredient. Non-limiting examples of primary explosives include, lead azide, lead styphnate and mercury fulminate. In a preferred embodiment, the pyrotechnic fastener comprises a nut and bolt mechanism, wherein at least one of the nut and the bolt is made of a pyrotechnic mixture. The controlled explosion causes the pyrotechnic mixture to release energy in a limited reaction zone associated with the pyrotechnic fastener.

Use of pyrotechnic fasteners can cause immediate disengagement of the door from the door frame upon detection of an event. Advantageously, occupants can exit the enclosure quickly in case of emergency. Also, the occupants need not be skilled to open the door during the emergency.

According to the claimed invention, the safety system comprises a means for unlocking the door when the pyrotechnic fastener is disengaged, the means for unlocking the door is one of a spring release mechanism and a detachable joint. In a further embodiment, the detachable joint comprises a breakable member adapted to break upon disengaging the at least one pyrotechnic fastener. In one implementation, the breakable member is made of a polycrystalline material. In another implementation, the breakable member is made of a ceramic material. In yet another implementation, the breakable member is made of polymer plastic. In a further implementation, the breakable member comprises an adhesive layer. The adhesive layer may be provided between the door and a door frame of the door. It must be understood by a person skilled in the art that the breakable member is made of a material with fragile properties.

The object of the present invention is also achieved by a door for an enclosure, comprising the safety system as described above.

The object of the present invention is achieved by an enclosure comprising a door with a safety system as described above. The enclosure further comprises one or more sensors for detecting one or more events. The one or more events are detected by sensing one or more critical parameters associated with the enclosure. The one or more sensors are operably coupled to the triggering circuit of the safety system. The one or more sensors are selected from a group comprising speed sensors, impact sensors, pressure sensors, fire sensors and smoke sensors. However, it must be understood by a person skilled in the art that the one or more sensors listed above are non-limiting and may include other types of sensors such as, for example, accelerometers.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1A: illustrates an emergency exit on a passenger train, in accordance with an embodiment of the present invention;
- FIG 1B: illustrates the emergency exit, in accordance with an embodiment of the present invention;
- FIG 1C: illustrates a safety system associated with the emergency exit, in accordance with an embodiment of the present invention;
- FIG 2: illustrates a sensing circuit connected to a triggering circuit, in accordance with an embodiment of the present invention;
- FIG 3A: is a cross-sectional view of a safety system for a door, in accordance with an embodiment of the present invention;
- FIG 3B: is a front-view of the safety system for the door, in accordance with an embodiment of the present invention;
- FIG 3C: shows a snap-pin position in a T-shaped groove, in accordance with an embodiment of the present invention;
- FIG 4A: is a cross-sectional view of a safety system for a door, in accordance with an embodiment of the present invention; and
- FIG 4B: is a front-view of the safety system for the door, in accordance with an embodiment of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

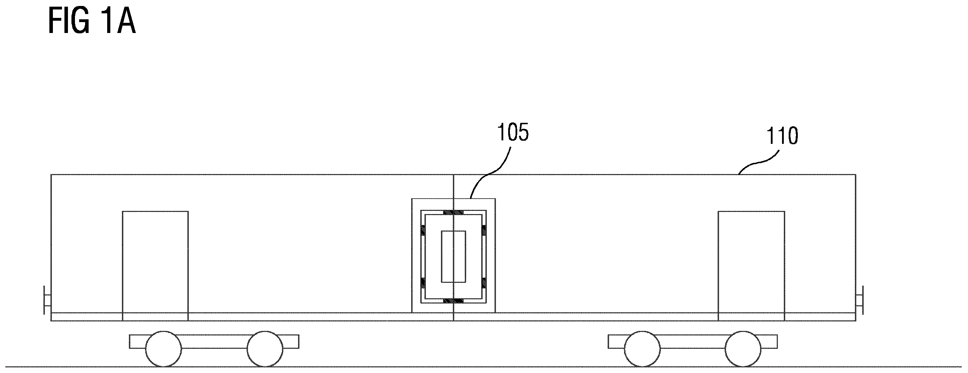

FIG 1A illustrates an emergency exit 105 on a passenger train 110, in accordance with an embodiment of the present invention. The emergency exit 105 is an opening suitable for egress of passengers from a rail car of the passenger train 110 in the event of an emergency that requires quick evacuation of passengers inside the rail car.

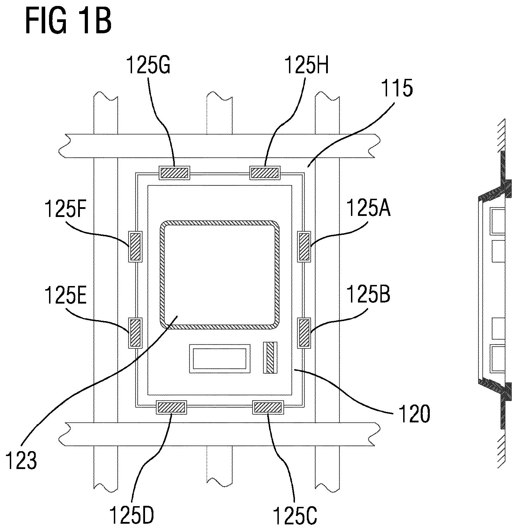

The emergency exit 105 comprises a door frame 115 and a door 120 mounted on to the door frame 115 as shown in FIG 1B. In the present embodiment, the door frame 115 is a rectangular structure comprising two vertical members and two horizontal members. The door 120 comprises two vertical members and two horizontal members. The door 120 is supported on the door frame 115 by means of hinges provided on one of the vertical members. The hinges permanently attach a first horizontal member of the door 120 to the door frame 115. The door 120 may comprise a transparent panel 123 that enables passengers on the rail car to see through.

Under normal conditions, the door 120 is maintained in locked condition using latch assemblies 125A, 125B... 125H. Each of the latch assemblies 125A-H engage the door 120 with the door frame 115. The latch assemblies 125A and 125B are mounted on a first vertical member of the door frame 115. The latch assemblies 125C to 125F are mounted on a lower horizontal member of the door frame 115. The latch assemblies 125G and 125H are mounted on a second vertical member of the door frame 115. Further, a latch strike is provided on the door 120 in alignment with the each of the latch assemblies 125A, 125B... 125H (hereinafter collectively referred as latch assembly 125). The latch strike receives a latch from the immediately aligned latch assembly 125 in order to engage the door 120 with the door frame 115. The latch assembly 125 along with the latch strike forms the fastening means.

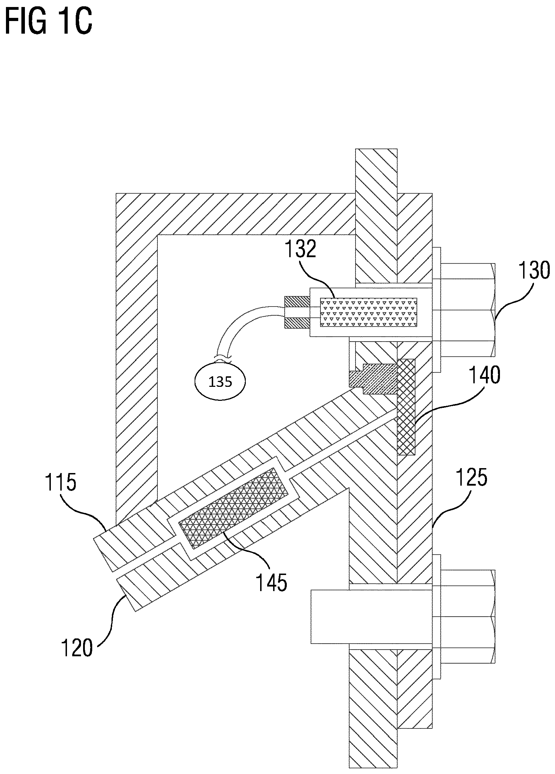

The latch assembly 125 is fastened to the door frame 115 of the door 120 using a pyrotechnic fastener 130 as shown in FIG 1C. In the present embodiment, the pyrotechnic fastener 130 is a bolt. Further, a shank of the bolt consists of an enclosed cavity 132 filled with a pyrotechnic mixture. In an embodiment, the pyrotechnic mixture may include Lead Azide as the primary explosive. The pyrotechnic mixture is detonated by a triggering circuit 135 based on occurrence of events. In the present embodiment, the events may include collision of the rail car, detection of fire with the rail car, flooding of the rail car and so on. The pyrotechnic mixture, when detonated, causes the bolt to break open due to controlled explosion of the pyrotechnic mixture. The latch assembly 125 comprises a breakable member 140 made of ceramic sandwiched between the door frame 115 and the latch assembly 125 as shown. A space between the door 120 and the door frame 115 is provided with a gasket 145, as shown, for tightly seating the door 120 onto the door frame 115 when locked.

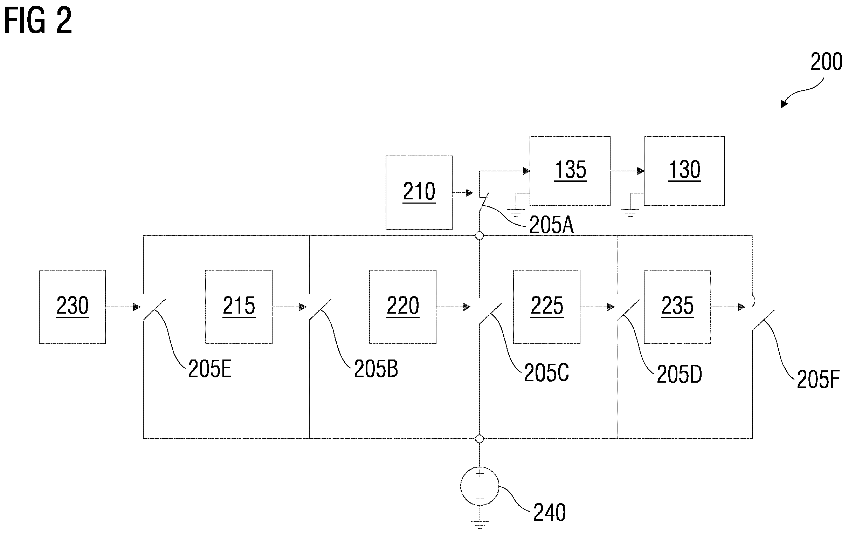

The triggering circuit 135 is connected to a sensing circuit 200 as shown in FIG 2. The sensing circuit 200 comprises a plurality of switches 205A to 205D arranged in parallel. Each of the switches is associated with a sensor provided in the rail car or operated manually. The sensing unit 200 comprises a first contact switch 205E and a second contact switch 205F. The first contact switch 205E may be for example, a magnetic contact switch provided on the rail car for receiving a manual input from passengers. The second contact switch 205F may be reserved for manual inputs from railway personnel. Each of the first contact switch 205E and the second contact switch 205F may be actuated manually, for example, in case of emergencies. In the present embodiment, the sensing circuit 200 comprises a speed sensor 210, an impact sensor 215, a fire/smoke sensor 220 and a pressure sensor 225. It must be understood that output of the above-mentioned sensors may be digital or analog. The first contact switch 205E is coupled to a first push button 230 and the second contact switch 205F is coupled to a second push button 235. The switching circuits may be closed based on a value of the output of the sensors 210, 215, 220, and 225 and status of the first push button 230 and the second push button 235. The sensing circuit 200 and the triggering circuit 135 are connected such that if output of at least one of the switches is HIGH, the triggering circuit generates the trigger signal. If the output of all the switching circuits is LOW, the triggering circuit does not generate a trigger signal. The sensing circuit is powered by a power supply 240.

Upon detecting an event, the switching circuit 200 causes the triggering circuit 135 to generate the trigger signal. The trigger signal causes the pyrotechnic fastener 130 to explode in a controlled manner. More specifically, the pyrotechnic mixture is activated by the trigger signal to generate energy through an exothermic chemical reaction. The energy generated may be based on an amplitude of the trigger signal. The generated energy causes the pyrotechnic fastener 130 to explode. Consequently, the door 120 is disengaged from the door frame 115. However, the breakable member 140 holds the door 120 on the door frame 115 temporarily until a minimal external force is applied to break open the breakable member 140. For example, the minimum external force may be in the form of a force exerted by human hand or a tool such as a hammer or a cutter.

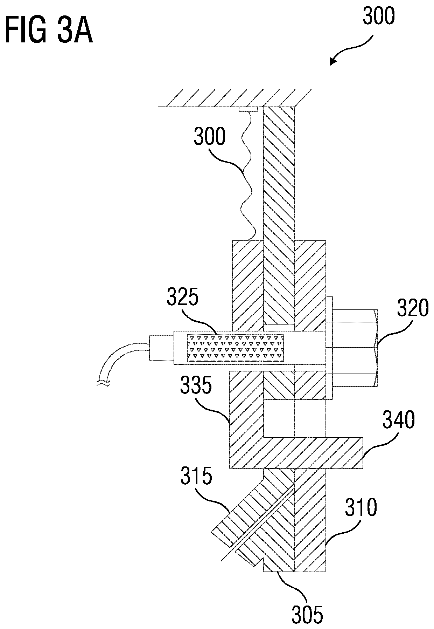

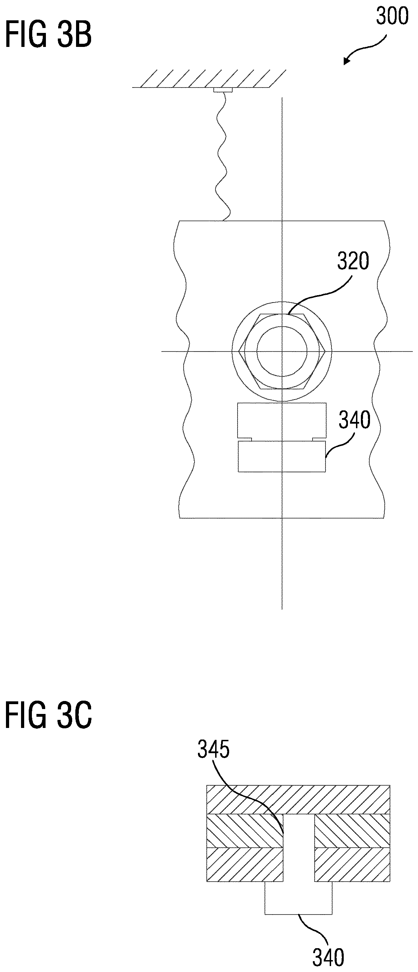

FIGS 3A and 3B illustrate a safety system 300 for a door 305, in accordance with another embodiment of the present invention. The safety system 300 comprises a latch assembly 310. The latch assembly 310 is fastened to a door frame 315 of the door 305 using a pyrotechnic fastener 320. In the present embodiment, the pyrotechnic fastener 320 is a bolt. Further, a shank of the bolt consists of an enclosed cavity 325 filled with a pyrotechnic mixture such as Lead Azide. In the present embodiment, the safety system 300 comprises a spring release mechanism as a means for unlocking the door 305. The spring release mechanism is operably coupled to the pyrotechnic fastener 320. The spring release mechanism comprises a spring 330 which loads a locking plate 335. The locking plate 335 is secured onto the door frame 315 using a snap pin 340. The snap pin 340 is positioned in a T-shaped groove 345 provided in the latch assembly 310 as shown in FIG 3C.

Upon controlled explosion of the pyrotechnic mixture, the spring release mechanism exerts a minimum force to separate the door 305 from the door frame 315. The snap pin 340 holds the door 305 in position after the controlled explosion to prevent the door 305 from immediately detaching from the door frame 315. More specifically, the snap pin 340 gets displaced by a force from the spring 330 into a slot in the T-shaped grove upon controlled explosion of the pyrotechnic mixture. As a result, the snap pin 340 holds the door 305 on the door frame 315 temporarily until a minimal external force is applied to break the snap pin 340. The snap pin 340 may be disengaged by exerting a minimum pressure either manually or using a tool.

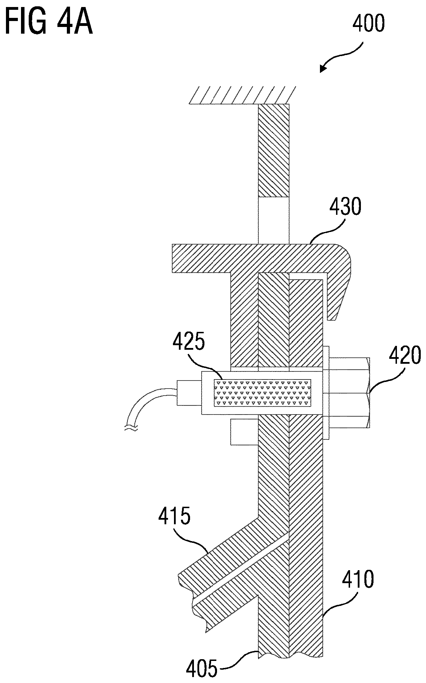

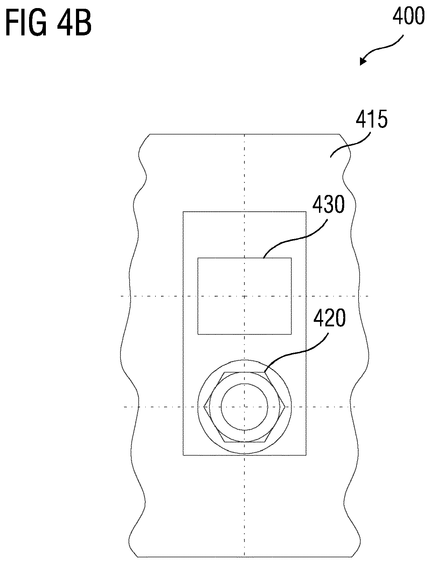

FIG 4 illustrates a safety system 400 for a door 405, in accordance with another embodiment of the present invention. The safety system 400 comprises a latch assembly 410. The latch assembly 410 is fastened to a door frame 415 of the door 405 using a pyrotechnic fastener 420. In the present embodiment, the pyrotechnic fastener 420 is a bolt. Further, a shank of the bolt consists of an enclosed cavity 425 filled with a pyrotechnic mixture comprising a primary explosive such as Lead Azide. The safety system 400 comprises a J-clamp/hook bracket arrangement 430 as the means for unlocking the door 405. The bracket arrangement 430 is a joint made of a fragile material such as, but not limited to, ceramic, polycrystalline material and polymer plastic. Upon controlled explosion of the pyrotechnic fastener 420, the bracket arrangement holds the door 405 on the door frame 415 temporarily until a minimal external force is applied to separate the latch assembly 410 from the bracket arrangement. The bracket arrangement may be disengaged by exerting a minimum force either manually or using a tool. Non-limiting examples of the tool include hammers and cutters. In another embodiment, a suitable push-fit mechanical arrangement may be used instead of the bracket arrangement.

The foregoing examples have been provided merely for the purpose of explanation and are in no way to be construed as limiting of the present invention disclosed herein and defined by the appended claims. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may affect numerous modifications thereto and changes may be made without departing from the scope of the invention in its aspects.

### List of reference signs

- 105: Emergency exit
- 110: passenger train
- 115: door frame
- 120: door
- 123: transparent panel
- 125: latch assembly
- 130: pyrotechnic fastener
- 132: enclosed cavity
- 135: triggering circuit
- 140: breakable member
- 145: gasket
- 200: sensing circuit
- 205A-D: plurality of switches
- 205E: first contact switch
- 205F: second contact switch
- 210: speed sensor
- 215: impact sensor
- 220: fire/smoke sensor
- 225: pressure sensor
- 230: first push button
- 235: second push button
- 240: power supply
- 300: safety system
- 305: door
- 310: latch assembly
- 315: door frame
- 320: pyrotechnic fastener
- 325: enclosed cavity
- 330: spring
- 335: locking plate
- 340: snap pin
- 345: T-shaped groove
- 400: safety system
- 405: door
- 410: latch assembly
- 415: door frame
- 420: pyrotechnic fastener
- 425: enclosed cavity
- 430: J-clamp/hook bracket arrangement

## Claims

1. A safety system (300, 400) for an enclosure comprising a door (120, 305, 405), comprising:
a triggering circuit (135) configured to generate a trigger signal based on an event associated with the enclosure; and
a fastening means operably coupled to the triggering circuit (135), wherein the fastening means is adapted to maintain the door (120, 305, 405) of the enclosure in a locked condition and disengage itself to unlock the door (120, 305, 405) of the enclosure in response to the triggering signal;
wherein the fastening means comprises:
at least one pyrotechnic fastener (130, 320, 420) comprising:
a means for maintaining the door (120, 305, 405) in the locked condition; and
a means for aiding a controlled explosion to disengage the pyrotechnic fastener (130, 320, 420) based on the trigger signal generated by the triggering circuit (135);
**characterized in that**
the fastening means further comprises a means for unlocking the door (120, 305, 405)
when the pyrotechnic fastener (130, 320, 420) is disengaged, wherein the means for unlocking the door (120, 305, 405) comprises one of a spring release mechanism and a detachable joint.

2. The safety system (300, 400) according to claim 1, in which the means for unlocking the door (120, 305, 405) comprises a detachable joint, wherein the detachable joint comprises:
a breakable member (140) adapted to break upon disengaging of the at least one pyrotechnic fastener (130, 320, 420).

3. The safety system (300, 400) according to claim 2, wherein the breakable member (140) is made of a polycrystalline material.

4. The safety system (300, 400) according to claim 2, wherein the breakable member (140) is made of a ceramic material.

5. The safety system (300, 400) according to claim 2, wherein the breakable member (140) is made of polymer plastic.

6. The safety system (300, 400) according to claim 2, wherein the breakable member (140) comprises an adhesive layer.

7. A door (120, 305, 405) for an enclosure comprising a safety system (300, 400) of according to any of the claims 1 to 6.

8. An enclosure comprising:
a door (120, 305, 405) comprising a safety system (300, 400) according to any of the claims 1 to 6; and
one or more sensors for detecting one or more events, wherein the one or more sensors are operably coupled to the triggering circuit (135) of the safety system (300, 400).

9. The enclosure according to claim 8, wherein the one or more sensors are selected from a group comprising speed sensors (210), impact sensors (215), pressure sensors (225), fire (220) sensors and smoke sensors.

10. A rail vehicle comprising a safety system (300, 400) as claimed in claim 1.

## Patentansprüche

1. Sicherheitssystem (300, 400) für ein Gehäuse, das eine Tür (120, 305, 405) umfasst, umfassend:
eine Auslöseschaltung (135), die so konfiguriert ist, dass sie auf Grundlage eines mit dem Gehäuse zusammenhängenden Ereignisses ein Auslösesignal erzeugt; und
ein Befestigungsmittel, das betriebsmäßig mit der Auslöseschaltung (135) gekoppelt ist, wobei das Befestigungsmittel so ausgelegt ist, dass es die Tür (120, 305, 405) des Gehäuses in einem verriegelten Zustand hält und sich in Reaktion auf das Auslösesignal löst, um die Tür (120, 305, 405) des Gehäuses zu entriegeln;
wobei das Befestigungsmittel umfasst:
mindestens eine pyrotechnische Befestigungseinrichtung (130, 320, 420), umfassend:
ein Mittel zum Halten der Tür (120, 305, 405) im verriegelten Zustand; und
ein Mittel zum Unterstützen einer kontrollierten Explosion, um die pyrotechnische Befestigungseinrichtung (130, 320, 420) auf Grundlage des von der Auslöseschaltung (135) erzeugten Auslösesignals zu lösen;
**dadurch gekennzeichnet, dass** das Befestigungsmittel ferner umfasst:
ein Mittel zum Entriegeln der Tür (120, 305, 405), wenn die pyrotechnische Befestigungseinrichtung (130, 320, 420) gelöst ist, wobei das Mittel zum Entriegeln der Tür (120, 305, 405) entweder einen Federentriegelungsmechanismus oder ein lösbares Gelenk umfasst.

2. Sicherheitssystem (300, 400) nach Anspruch 1, wobei das Mittel zum Entriegeln der Tür (120, 305, 405) ein lösbares Gelenk umfasst, wobei das lösbare Gelenk umfasst:
ein zerbrechbares Element (140), das so ausgelegt ist, dass es bei einem Lösen der mindestens einen pyrotechnischen Befestigungseinrichtung (130, 320, 420) bricht.

3. Sicherheitssystem (300, 400) nach Anspruch 2, wobei das zerbrechbare Element (140) aus einem polykristallinen Material hergestellt ist.

4. Sicherheitssystem (300, 400) nach Anspruch 2, wobei das zerbrechbare Element (140) aus einem keramischen Material hergestellt ist.

5. Sicherheitssystem (300, 400) nach Anspruch 2, wobei das zerbrechbare Element (140) aus Polymerkunststoff hergestellt ist.

6. Sicherheitssystem (300, 400) nach Anspruch 2, wobei das zerbrechbare Element (140) eine Klebeschicht umfasst.

7. Tür (120, 305, 405) für ein Gehäuse, die ein Sicherheitssystem (300, 400) nach einem der Ansprüche 1 bis 6 umfasst.

8. Gehäuse, umfassend:
eine Tür (120, 305, 405), die ein Sicherheitssystem (300, 400) nach einem der Ansprüche 1 bis 6 umfasst; und
einen oder mehrere Sensoren zum Detektieren eines oder mehrerer Ereignisse, wobei der eine oder die mehreren Sensoren betriebsmäßig mit der Auslöseschaltung (135) des Sicherheitssystems (300, 400) gekoppelt sind.

9. Gehäuse nach Anspruch 8, wobei der eine oder die mehreren Sensoren ausgewählt sind aus einer Gruppe, bestehend aus Geschwindigkeitssensoren (210), Aufprallsensoren (215), Drucksensoren (225), Brandmeldern (220) und Rauchsensoren.

10. Schienenfahrzeug, das ein Sicherheitssystem (300, 400) nach Anspruch 1 umfasst.

## Revendications

1. Système de sécurité (300, 400) pour une enceinte comprenant une porte (120, 305, 405), comprenant :
un circuit de déclenchement (135) configuré pour générer un signal déclencheur sur la base d'un événement associé à l'enceinte ; et
un moyen de fixation couplé fonctionnellement au circuit de déclenchement (135), le moyen de fixation étant adapté pour maintenir la porte (120, 305, 405) de l'enceinte dans un état verrouillé et se désengager pour déverrouiller la porte (120, 305, 405) de l'enceinte en réponse au signal de déclenchement ;
le moyen de fixation comprenant :
au moins une attache pyrotechnique (130, 320, 420) comprenant :
un moyen pour maintenir la porte (120, 305, 405) à l'état verrouillé ; et
un moyen d'aide à une explosion contrôlée pour dégager l'attache pyrotechnique (130, 320, 420) sur la base du signal déclencheur généré par le circuit de déclenchement (135) ;
**caractérisé en ce que** le moyen de fixation comprend en outre : un moyen de déverrouillage de la porte (120, 305, 405) lorsque l'attache pyrotechnique (130, 320, 420) est désengagée, le moyen de déverrouillage de la porte (120, 305, 405) comprenant l'un d'un mécanisme de libération à ressort et d'un joint détachable.

2. Système de sécurité (300, 400) selon la revendication 1, dans lequel le moyen pour déverrouiller la porte (120, 305, 405) comprend un joint détachable, le joint détachable comprenant : un élément cassable (140) adapté pour se rompre lors du désengagement de l'au moins une attache pyrotechnique (130, 320, 420) .

3. Système de sécurité (300, 400) selon la revendication 2, l'élément cassable (140) étant constitué d'un matériau polycristallin.

4. Système de sécurité (300, 400) selon la revendication 2, l'élément cassable (140) étant constitué d'un matériau céramique.

5. Système de sécurité (300, 400) selon la revendication 2, l'élément cassable (140) étant constitué de plastique polymère.

6. Système de sécurité (300, 400) selon la revendication 2, l'élément cassable (140) comprenant une couche adhésive.

7. Porte (120, 305, 405) pour une enceinte comprenant un système de sécurité (300, 400) selon l'une quelconque des revendications 1 à **6.**

8. Enceinte comprenant :
une porte (120, 305, 405) comprenant un système de sécurité (300, 400) selon l'une quelconque des revendications 1 à 6 ; et
un ou plusieurs capteurs pour détecter un ou plusieurs événements, le ou les capteurs étant couplés de manière fonctionnelle au circuit de déclenchement (135) du système de sécurité (300, 400).

9. Enceinte selon la revendication 8, le ou les capteurs étant sélectionnés dans un groupe comprenant des capteurs de vitesse (210), des capteurs d'impact (215), des capteurs de pression (225), des capteurs d'incendie (220) et des capteurs de fumée.

10. Véhicule ferroviaire comprenant un système de sécurité (300, 400) selon la revendication 1.
